# FASCICULE DE BREVET EUROPEEN

(11) **EP 2 449 705 B1**
(45) Date de publication et mention de la délivrance du brevet: **17.04.2013**
(21) Numéro de dépôt: 10745352.4
(22) Date de dépôt: 28.06.2010
(51) Int. Cl.: H04J 3/06, G01D 4/00

(54) **PROCÉDÉ D'ÉCHANGE D'INFORMATIONS ENTRE DES CAPTEURS DE COMPTEURS DE CONSOMMATION ET UNE PASSERELLE DE COMMUNICATION.**
VERFAHREN FÜR DEN INFORMATIONSAUSTAUSCH ZWISCHEN STROMMESSERN UND KOMMUNIKATIONSGATEWAY
METHOD FOR EXCHANGING INFORMATION BETWEEN POWER METER SENSORS AND A COMMUNICATION GATEWAY

(30) Priorité: 30.06.2009 FR 0954446
(43) Date de publication de la demande: 09.05.2012
(73) Titulaire: SAGEMCOM ENERGY & TELECOM SAS, 92500 Rueil-Malmaison (FR)
(72) Inventeur: Barois, Jérôme, F-92500 Rueil-Malmaison (FR)
(74) Mandataire: Camus, Olivier Jean-Claude
(86) Numéro de dépôt international: PCT/FR2010/051337
(87) Numéro de publication internationale: WO 2011/001091

(56) Documents cités:
- WO-A2-02/27640
- US-A1- 2004 181 492
- US-A1- 2007 274 349
- US-A1- 2009 046 773
- NORDMAN M M ET AL: "Synchronizing low-cost energy aware sensors in a short-range wireless cell" DIGITAL SYSTEMS, DESIGN, 2001. PROCEEDINGS. EUROMICRO SYMPOSIUM ON SEPT. 4=6, 2001, PISCATAWAY, NJ, USA,IEEE, 1 janvier 2001 (2001-01-01), pages 438-445, XP010558499 ISBN: 978-0-7695-1239-6
- FERRARI P ET AL: "IEEE 1588-based Synchronization System for a Displacement Sensor Network" INSTRUMENTATION AND MEASUREMENT TECHNOLOGY CONFERENCE, 2006. IMTC 2006 . PROCEEDINGS OF THE IEEE, IEEE, PI, 1 avril 2006 (2006-04-01), pages 1926-1930, XP031057025 ISBN: 978-0-7803-9359-2

## Description

### DOMAINE TECHNIQUE DE L'INVENTION

La présente invention a pour objet un procédé d'échange d'informations entre des capteurs de compteurs de consommation et une passerelle de communication. Le procédé selon l'invention a vocation à être mis en oeuvre dans un environnement domestique, ou, d'une façon un peu plus générale, dans un environnement dans lequel se trouve au moins un compteur, dit compteur de consommation, associé à un capteur. Les compteurs considérés sont par exemple un compteur électrique, un compteur d'eau ou encore un compteur à gaz, dont la fonction première est de mesurer des quantités d'électricité, d'eau ou de gaz consommées.

Le domaine de l'invention est, d'une façon générale, celui des échanges à distance d'informations avec des compteurs de consommation. Les échanges à distance, qui sont rendus possible grâce à la présence de capteurs associés à chaque compteur et d'une passerelle de communication disposée dans un environnement proche des capteurs gérés par ladite passerelle, permettent notamment la surveillance à distance d'informations relatives aux compteurs de consommation, notamment la consommation mesurée par lesdits compteurs de consommation, et aussi l'émission d'informations de commandes de fonctionnement, via la passerelle de communication, vers les capteurs des compteurs considérés.

La présente invention a essentiellement pour but de fiabiliser et de simplifier les échanges à distance considérés, en améliorant la précision de ces informations, notamment en garantissant un horodatage précis des informations échangées, tout en économisant de la bande passante disponible entre les capteurs et la passerelle à laquelle ils sont rattachés.

### ARRIERE-PLAN TECHNOLOGIQUE DE L'INVENTION

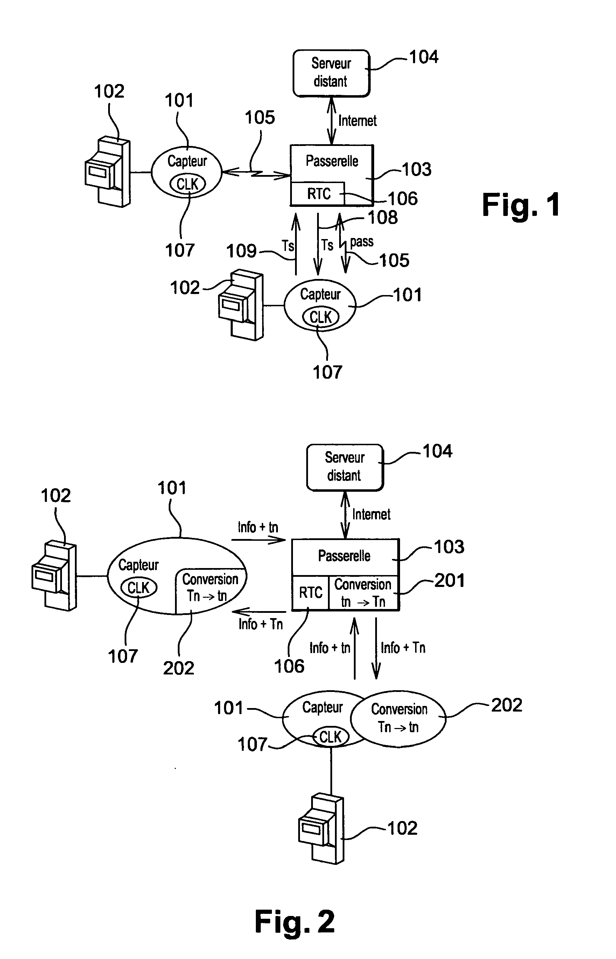

Dans le domaine des compteurs, comme illustré à la figure 1, afin de collecter à distance les informations concernant une grandeur physique telle que de l'eau, le gaz, la chaleur, l'électricité etc., mais également pour recevoir des informations de commande, une unité d'acquisition de données telle qu'un capteur 101 est reliée à un compteur 102 et est apte à coopérer avec une passerelle de communication 103, disposée dans un périmètre proche - typiquement une vingtaine de mètres maximum ; la passerelle de communication est elle-même apte à recevoir et à émettre des informations depuis et vers un serveur distant 104, par exemple par le réseau Internet, ou par le réseau téléphonique commuté, ledit serveur distant 104 étant par exemple un serveur appartenant au fournisseur de la source d'énergie associée au(x) capteur(s) considéré(s).

Ainsi, la passerelle de communication 103 est amenée à échanger des informations, notamment des informations de consommation et des informations de commande, avec une pluralité de capteurs 101, chaque capteur étant associé avec un compteur 102. Les échanges d'information se font par voie radio 105, le plus souvent à une fréquence de 866 MHz (MégaHertz). La passerelle de communication 103 comporte notamment un dispositif 106, dit dispositif RTC (Real Time Clock en langue anglaise, pour Horloge Temps Réel) qui permet de donner une référence temporelle fiable aux informations échangées avec les différents capteurs 101. Chaque capteur 101 comporte également une horloge interne 107 à quartz, de précision moins fiable que le dispositif RTC 106 de la passerelle 103.

Dans l'état de la technique, lorsque la passerelle 103 transmet une information de commande à un ou plusieurs capteurs 101, l'information considérée est marquée par un horodatage, ou Time Stamp en langue anglaise ; un horodatage est une information qui permet de dater un événement, ledit événement étant par exemple le relevé d'une information de commande; de la même manière, lorsqu'une information de consommation est émise depuis un des capteurs 101 vers la passerelle 103, ladite information est également marquée par un horodatage qui doit être le plus précis possible. En effet, par exemple, la précision des horodatages est indispensable notamment aux moments où la tarification des consommations change, pour passer par exemple des tarifs heures creuses aux tarifs heures pleines.

Afin d'assurer une grande précision de l'horodatage, avant une transmission 109 d'information de consommation depuis le capteur 101 vers la passerelle 103, on procède préalablement à une transmission 108 d'une référence temporelle TSpass depuis la passerelle 103 vers chaque capteur 101 considéré. La référence temporelle TSpass permet de resynchroniser les horloges internes 107 de chaque capteur considéré. Ainsi, lorsqu'une information de consommation est transmise depuis le capteur 101, elle est transmise avec une référence temporelle TS correspondant directement à la référence temporelle de la passerelle 103.

Un tel fonctionnement pose un certain nombre de problèmes.

Tout d'abord, la nécessité de transmettre, préalablement à la transmission d'une quelconque information, la référence temporelle TSpass occupe de manière importante la bande passante. Ce problème est d'autant plus important que le nombre de compteurs gérés par la passerelle est significatif. Ensuite, la gestion des changements d'heure n'est pas assurée avec un tel système : en effet, pour un changement d'heure imposant de reculer d'une heure les horloges à une heure donnée (le plus souvent trois heures du matin), les informations échangées avec des références temporelles calées sur l'ancienne heure et les informations échangées avec des références temporelles calées sur la nouvelle heure se superposent et sont susceptibles de provoquer des dysfonctionnements.

Le fonctionnement des échanges d'informations entre la passerelle 103 et les capteurs 101 est donc sujette à mélioration. Le document: NORDMAN MM ET AL, "Synchronizing low-cost energy aware sensors in a short range wireless cell", 01-01-2001, divulgue un procédé de synchronisation temporelle dans un réseau de capteurs sans fil. Dans ce procédé les informations de commande sont marquées par des horodatages.

### DESCRIPTION GENERALE DE L'INVENTION

Le procédé selon l'invention apporte une réponse aux problèmes qui viennent d'être évoqués. Dans l'invention, on propose une solution pour que les échanges d'informations entre les capteurs et la passerelle à laquelle ils sont rattachés utilisent moins de bande passante que dans les procédés mis en oeuvre dans l'état de la technique, tout en garantissant un horodatage particulièrement précis, et s'affranchissant des problèmes rencontrés lors des changements d'heure. A cet effet, on propose dans l'invention, de ne plus transmettre préalablement de référence temporelle depuis la passerelle vers les capteurs qui lui sont rattachés, mais de recevoir des informations, notamment des informations de consommation, avec des informations temporelles directement fournies par les horloges internes des capteurs, sans que celles-ci aient fait l'objet d'une opération préalable de synchronisation. L'information temporelle fournie par le capteur est alors interprétée au sein de la passerelle, ou éventuellement du serveur distant, pour, le cas échéant, corriger une dérive à partir de données de correction établies au moyen d'informations temporelles précédemment reçues. De la même manière, lorsque une information de commande est transmise par la passerelle vers un ou plusieurs capteurs, la référence temporelle fournie par le dispositif RTC de la passerelle est convertie au sein de chaque capteur pour tenir compte de la dérive temporelle du ces capteurs considérés, ladite conversion étant réalisée à partir d'informations de dérives temporelles préalablement observées.

L'invention concerne donc essentiellement un procédé d'échange d'informations selon les revendications 1-6.

l'invention, dans la mesure où elles ne s'excluent pas mutuellement, sont combinées selon toutes les possibilités d'association pour aboutir à différents exemples de mise en oeuvre de l'invention.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention. Les figures montrent :
- à la figure 1, déjà décrite, une représentation schématique d'une installation permettant la mise en oeuvre d'un procédé de l'état de la technique pour l'échange d'informations entre une passerelle et différents capteurs ;
- à la figure 2, une représentation schématique d'une installation permettant la mise en oeuvre d'un procédé selon l'invention pour l'échange d'informations entre une passerelle et différents capteurs.

### DESCRIPTION DES FORMES DE REALISATION PREFEREES DE L'INVENTION

Les différents éléments apparaissant sur plusieurs figures auront gardé, sauf précision contraire, la même référence.

A la figure 2, on a représenté une installation 200 permettant l'exécution d'un exemple de mise en oeuvre du procédé selon l'invention. L'installation 200 comporte les différents éléments décrits en référence à la figure 1, à savoir :
- des capteurs 101, associés à des compteurs de consommation 102, lesdits capteurs comportant une horloge interne 107 ;
- une passerelle de communication 103, comportant un dispositif RTC 106, aptes à communiquer d'une part avec les capteurs 101 par liaison radio 105, et d'autre part avec un serveur distant 104, par exemple par une liaison Internet.

Dans le procédé selon l'invention, lorsqu'une information de données est transmise depuis un capteur 101, par exemple une information relative à la consommation d'un compteur, ou une information relative à des caractéristiques du compteur ou du capteur lui-même, vers la passerelle 103, on s'affranchit de l'opération préalable de transmission de la référence temporelle de référence disponible au niveau du dispositif RTC 106.

Ainsi, lorsqu'une information de données est transmise à la passerelle 103, elle est associée à une information temporelle locale tn fournie par l'horloge interne. Lorsque la passerelle 103 reçoit une telle information temporelle locale, une application de conversion 201 est appliquée pour convertir la valeur de l'information temporelle locale tn en une valeur d'information temporelle de référence Tn. Dans un autre exemple de mise en oeuvre, l'opération de conversion est réalisée au sein du serveur distant 104.

D'une manière générale, on désigne par le sigle T les horodatages du dispositif RTC 106 de la passerelle 103, et par le sigle t les horodatages fournis par les horloges internes 107 des périphériques de type capteurs 101 ; les sigles Tn et tn représentent ainsi les horodatages fournis lors d'un nième échange d'informations entre la passerelle 103 et un ou plusieurs capteurs 102 respectivement par le dispositif RTC et par les horloges internes des capteurs. Les sigles T(n-1) et t(n-1) représentent les mêmes horodatages observés pour l'échange d'informations précédent.

Avantageusement, dans l'invention, pour réaliser l'opération de conversion d'une valeur tn en une valeur Tn, on utilise une ou plusieurs informations de dérive précédemment observées.

Ainsi, dans le cas où une unique valeur de dérive précédente est disponible, on considère que la dérive de temps est inchangée, et que donc l'écart de temps reste constant.

On obtient ainsi la relation Tn =T(n-1)-t(n-1) +tn

Dans le cas où deux valeurs de dérive précédente sont disponibles, on suppose que la valeur de dérive observée est constante ; cette valeur de dérive est donnée par la relation : an=((Tn-tn)-(T(n-1)-t(n-1)))/(Tn-T(n-1)). On obtient alors la relation Tn=(tn-t(n-1))/(1-an)+T(n-1).

Dans le cas où trois valeurs de dérive précédente sont disponibles, on suppose que la valeur de dérive observée n'est pas constante, mais que sa variation est constante ; cette valeur de variation de dérive est donnée par la relation Δα=αn-α(n-1)= α(n-1)- α(n-2)=K, où K est une constante. On obtient alors la relation Tn=(t(n-1)-tn)/(1-2a(n-1)+α(n-2))+T(n-1).

De la même manière, lorsqu'une information, par exemple une information de commande, est transmise depuis la passerelle 103 vers au moins un des capteurs 102, elle est associée à une information temporelle de référence Tn fournie par le dispositif RTC 106. Lorsque le ou les capteurs 102 reçoivent une telle information temporelle de référence, une application de conversion 202 est appliquée pour convertir la valeur de l'information temporelle de référence Tn en une valeur d'information temporelle locale tn.

En respectant les hypothèses précédemment énoncées, on obtient alors les relations suivantes :
- si une unique valeur de référence est disponible : tn=Tn-T(n-1)+t(n-1) ;
- si deux valeurs de référence sont disponibles : tn=(1-αn)·(T n-T(n-1))+t(n-1) ;
- si trois valeurs de référence sont disponibles : tn=(1-2·α(n-1)+ α(n-2))·(Tn-T(n-1))+t(n-1).

Les différentes relations qui viennent d'être données sont avantageuses à mettre en oeuvre du fait de leur simplicité. Elles peuvent cependant être remplacées par d'autres relations ou procédés de calcul faisant intervenir des valeurs de références temporelles précédemment observées.

Avantageusement, on prévoit, dans certains cas, d'invalider les différents calculs de conversion. Ainsi, en considérant que la grandeur Δα ne doit pas être soumise à de fort changement. Si de telles brusque évolutions sont décelées, ce ne peut être dût qu'a une manipulation arbitraire de l'une des base de temps; quelque soit la cause. Dans ces cas là les données d'horodatages précédentes ne sont plus valables et de nouvelles mesures temporelles doivent être réalisées. De la même manière, la durée entre deux échanges d'information est trop important, typiquement plusieurs heures, pour que l'on puisse maintenir les différentes hypothèses précédemment formulées.

## Revendications

1. Procédé d'échange d'informations entre au moins un capteur associé à un compteur de consommation et une passerelle de communication apte à recevoir des informations de données, notamment des informations de consommation, depuis les capteurs qui lui sont rattachés, et à émettre des informations de commande vers lesdits capteurs, ladite passerelle de communication comportant notamment un dispositif de marquage temporel de référence, apte à générer une information temporelle de référence, chaque capteur comportant une horloge interne apte à générer une information temporelle locale, **caractérisé en ce que** le procédé comporte les différentes étapes consistant à :
- associer une des informations de données produite par le au moins un capteur à une valeur d'information temporelle locale générée par l'horloge interne du au moins un capteur considéré ;
- transmettre, l'information de données, associée à la valeur de l'information temporelle locale, à la passerelle ;
- réaliser, après l'étape de transmission, une opération de conversion temporelle pour associer l'information temporelle locale à une valeur d'information temporelle de référence, ladite conversion étant réalisée au sein de la passerelle ou d'un serveur distant apte à communiquer avec la passerelle de communication à partir d'informations de dérives temporelles préalablement observées ;
- associer une information de commande produite par la passerelle de communication à une valeur d'information temporelle de référence générée par le dispositif de marquage temporel de référence ;
- transmettre l'information de commande, associée à la valeur de l'information temporelle de référence, à au moins un des capteurs ;
- réaliser, après l'étape de transmission vers le au moins un des capteurs, une opération de conversion temporelle pour associer, pour chaque capteur considéré, la valeur de l'information temporelle de référence à une valeur d'information temporelle locale, ladite conversion étant réalisée au sein de chaque capteur considéré à partir d'informations de dérives temporelles préalablement observées.

2. Procédé selon la revendication précédente **caractérisé en ce que** l'opération de conversion est réalisée, pour chaque capteur considéré, à partir d'au moins une information de dérive précédemment observée pour ledit capteur considéré.

3. Procédé selon la revendication 1 **caractérisé en ce que** :
- lorsque une unique information de dérive est disponible, établir l'information temporelle de référence selon la relation: Tn-tn=T(n-1)-t(n-1) ;
- lorsque deux informations de dérive sont disponibles, établir l'information temporelle de référence selon la relation : Tn=(tn-t(n-1))/(1-αn)+T(n-1);
- lorsque trois informations de dérive sont disponibles, établir l'information temporelle de référence selon la relation : Tn=(t(n-1)-tn)/(1-2α(n-1)+ α(n-2))+T(n-1), où :
- les sigles Tn et tn représentent des horodatages fournis lors d'un nième échange d'informations entre la passerelle et un ou plusieurs capteurs respectivement par le dispositif de marquage temporel de référence et par les horloges internes des capteurs ;
- α est une valeur de dérive observée constante

4. Procédé selon l'une quelconque des revendications précédentes **caractérisé en ce que** l'opération de conversion est réalisée, pour chaque capteur considéré, à partir d'au moins une information de dérive précédemment observée pour ledit capteur considéré.

5. Procédé selon la revendication précédente **caractérisé en ce que** :
- lorsque une unique information de dérive est disponible, établir l'information temporelle de référence selon la relation: Tn-tn=T(n-1)-t(n-1) ;
- lorsque deux informations de dérive sont disponibles, établir l'information temporelle de référence selon la relation : tn=(1-αn)-(Tn-T(n-1))+t(n-1) ;
- lorsque trois informations de dérive sont disponibles, établir l'information temporelle de référence selon la relation : tn=(1-2-α(n-1)+ α(n-2))·(Tn-T(n-1))+t(n-1), où :
- les sigles Tn et tn représentent des horodatages fournis lors d'un nième échange d'informations entre la passerelle et un ou plusieurs capteurs respectivement par le dispositif de marquage temporel de référence et par les horloges internes des capteurs ;
- α est une valeur de dérive observée constante.

6. Procédé selon l'une au moins des revendications précédentes , et selon l'une au moins des revendications 2, 4 ou 5, **caractérisé en ce qu'**il comporte une étape supplémentaire d'invalidation des données lorsque la dernière opération de conversion temporelle a été effectuée à un instant antérieur à un instant préalablement déterminé, et/ou lorsque deux information de dérives consécutives présent un écart supérieur à un seuil de dérive préalablement déterminé

## Claims

1. A method for exchanging information between at least one sensor associated with a power meter and a communication gateway capable of receiving data information, particularly power use information, from the sensors that are attached thereto, and to transmit control information to said sensors, said communication gateway particularly comprising a reference time marking device that is capable of generating reference time information, each sensor comprising an internal clock that is capable of generating local time information, **characterized in that** the method comprises various steps consisting of:
- associating one piece of the data information produced by the at least one sensor with a local time information value generated by the internal clock of the at least one sensor under consideration;
- transmitting the data information associated with the local time information value to the gateway;
- performing, after the transmission step, a time conversion operation to associate the local time information with a reference time information value, said conversion being carried out within the gateway or a remote server capable of communicating with the communication gateway from the time drift information previously observed;
- associating a piece of the control information produced by the communication gateway with a reference time information value generated by the reference time marking device;
- transmitting the control information, associated with the reference time information value, to at least one of the sensors;
- performing, after the transmission step to the at least one sensor, a time conversion operation to associate, for each sensor under consideration, the value of the reference time information with a local time information value, said conversion being carried out within each sensor under consideration from the time drift information previously observed.

2. The method according to the previous claim **characterized in that** the conversion operation is carried out for each sensor under consideration from at least one piece of drift information previously observed for said sensor under consideration.

3. The method according to claim 1 **characterized in that**:
- when a single piece of drift information is available, establish the reference time information according to the relationship: Tn-tn=T(n-1)-t(n-1);
- when two pieces of drift information are available, establish the reference time information according to the relationship: Tn=(tn-t(n-1))/(1-an)+T(n-1);
- when three pieces of drift information are available, establish the reference time information according to the relationship: Tn=(t(n-1)-tn)/(1-2α(n-1)+α(n-2))+T(n-1), where:
- the letters Tn and tn represent time stamps provided during an umpteenth exchange of information between the gateway and one or more sensors respectively by the reference time marking device and by the internal clocks of the sensors;
- α is a drift value observed to be constant.

4. The method according to any one of the previous claims **characterized in that** the conversion operation is carried out for each sensor under consideration from at least one piece of drift information previously observed for said sensor under consideration.

5. The method according to the previous claim **characterized in that**:
- when a single piece of drift information is available, establish the reference time information according to the relationship: Tn-tn=T(n-1)-t(n-1);
- when two pieces of drift information are available, establish the reference time information according to the relationship: tn=(1-αn)·(Tn-T(n-1))+t(n-1);
- when three pieces of drift information are available, establish the reference time information according to the relationship: tn=(1-2·α(n-1) + α(n-2))·(Tn-T(n-1))+t(n-1), where:
- the letters Tn and tn represent time stamps provided during an umpteenth exchange of information between the gateway and one or more sensors respectively by the reference time marking device and by the internal clocks of the sensors;
- α is a drift value observed to be constant.

6. The method according to at least one of the previous claims, and according to at least one of claims 2, 4 or 5, **characterized in that** the method comprises an additional step of invalidating data when the last time conversion operation has been carried out at an instant prior to a previously determined instant, and/or when two consecutive pieces of drift information present a discrepancy greater than a previously determined drift threshold.

## Patentansprüche

1. Verfahren zum Austausch von Informationen zwischen mindestens einem Sensor, der mit einem Verbrauchszähler verbunden ist, und einem Kommunikationsgateway, das geeignet ist, Dateninformationen, insbesondere Verbrauchsinformationen, von den Sensoren, die mit ihm in Verbindung stehen, zu empfangen und Steuerinformationen zu den Sensoren zu senden, wobei das Kommunikationsgateway insbesondere eine Referenzvorrichtung zur Zeitmarkierung aufweist, die geeignet ist, eine Referenzzeitinformation zu erzeugen, wobei jeder Sensor einen Taktgeber aufweist, der geeignet ist, eine lokale Zeitinformation zu erzeugen, **dadurch gekennzeichnet, dass** das Verfahren die verschiedenen Schritte umfasst, die darin bestehen:
- eine der Dateninformationen, die von dem mindestens einen Sensor erzeugt wird, mit einem lokalen Zeitinformationswert zu verknüpfen, der von dem Taktgeber des mindestens einen berücksichtigten Sensoren erzeugt wird;
- die Dateninformation, die mit dem Wert der lokalen Zeitinformation verknüpft ist, an das Gateway zu übertragen;
- nach dem Schritt der Übertragung eine Zeitumwandlung durchzuführen, um die lokale Zeitinformation mit einem Referenzwert der Zeitinformation zu verknüpfen, wobei die Umwandlung in dem Gateway oder in einem Remote-Server erfolgt, der geeignet ist, mit dem Kommunikationsgateway anhand von vorher beobachteten Zeitdriftinformationen zu kommunizieren;
- eine Steuerinformation, die von dem Kommunikationsgateway erzeugt wird, mit einem Referenzwert der Zeitinformation, die von der Referenzvorrichtung zur Zeitmarkierung erzeugt wird, zu verknüpfen;
- die Steuerinformation, die mit dem Wert der lokalen Zeitinformation verknüpft ist, an mindestens einen der Sensoren zu übertragen;
- nach dem Schritt der Übertragung zu dem mindestens einen der Sensoren eine Zeitumwandlung durchzuführen, um für jeden berücksichtigten Sensoren den Referenzwert der Zeitinformation mit einem lokalen Zeitinformationswert zu verknüpfen, wobei die Umwandlung innerhalb jedes berücksichtigten Sensors anhand von vorher beobachteten Zeitdriftinformationen erfolgt.

2. Verfahren nach dem vorhergehenden Anspruch, **dadurch gekennzeichnet, dass** die Umwandlung für jeden berücksichtigten Sensor anhand von mindestens einer Driftinformationen erfolgt, die vorher für den berücksichtigten Sensor beobachtet wurde.

3. Verfahren nach Anspruch 1, **dadurch gekennzeichnet, dass**:
- wenn eine einzige Driftinformation verfügbar ist, die Referenzzeitinformation erstellen gemäß dem Verhältnis: Tn-tn=T(n-1)-t(n-1);
- wenn zwei Driftinformationen verfügbar sind, die Referenzzeitinformation erstellen gemäß dem Verhältnis: Tn=(tn-t(n-1))/(1-αn)+T(n-1);
- wenn drei Driftinformationen verfügbar sind, die Referenzzeitinformation erstellen gemäß dem Verhältnis: Tn=(t(n-1)-tn)/(1-2α(n-1)+α(n-2))+T(n-1), wobei:
- die Abkürzungen Tn und tn Zeitstempel darstellen, die bei einem nten Informationsaustausch zwischen dem Gateway und einem oder mehreren Sensoren von der Referenzvorrichtung zur Zeitmarkierung beziehungsweise von den Taktgebern der Sensoren geliefert werden;
- α ein konstanter beobachteter Driftwert ist

4. Verfahren nach einem der vorhergehenden Ansprüche, **dadurch gekennzeichnet, dass** die Umwandlung für jeden berücksichtigten Sensor anhand von mindestens einer Driftinformationen erfolgt, die vorher für den berücksichtigten Sensor beobachtet wurde.

5. Verfahren nach dem vorhergehenden Anspruch, **dadurch gekennzeichnet, dass**:
- wenn eine einzige Driftinformation verfügbar ist, die Referenzzeitinformation erstellen gemäß dem Verhältnis: Tn-tn=T(n-1)-t(n-1);
- wenn zwei Driftinformationen verfügbar sind, die Referenzzeitinformation erstellen gemäß dem Verhältnis: tn=(1-αn)·(T n-T(n-1))+t(n-1);
- wenn drei Driftinformationen verfügbar sind, die Referenzzeitinformation erstellen gemäß dem Verhältnis: tn=(1-2·α(n-1)+α(n-2))-(Tn-T(n-1))+t(n-1), wobei:
- die Abkürzungen Tn und tn Zeitstempel darstellen, die bei einem nten Informationsaustausch zwischen dem Gateway und einem oder mehreren Sensoren von der Referenzvorrichtung zur Zeitmarkierung beziehungsweise von den Taktgebern der Sensoren geliefert werden;
- α ein konstanter beobachteter Driftwert ist.

6. Verfahren nach mindestens einem der vorhergehenden Ansprüche und nach mindestens einem der Ansprüche 2, 4 oder 5, **dadurch gekennzeichnet, dass** es einen zusätzlichen Schritt der Ungültigerklärung der Daten umfasst, wenn die letzte Zeitumwandlung zu einem Zeitpunkt erfolgte, der vor einem vorher festgelegten Zeitpunkt liegt, und/oder wenn zwei aufeinander folgende Driftinformationen eine Abweichung aufweisen, die größer ist als ein vorher festgelegter Driftgrenzwert.
